# EUROPEAN PATENT SPECIFICATION

(11) **EP 4 138 204 B1**
(45) Date of publication and mention of the grant of the patent: **11.10.2023**
(21) Application number: 22188816.7
(22) Date of filing: 04.08.2022
(51) Int. Cl.: H01M 50/502, H01M 50/509

(54) **BUS BAR**
SAMMELSCHIENE
BARRE OMNIBUS

(30) Priority: 06.08.2021 JP 2021129485
(43) Date of publication of application: 22.02.2023
(73) Proprietor: Yazaki Corporation, Tokyo (JP)
(72) Inventor: Chaen, Takahiro, Kakegawa-shi, Shizuoka (JP); Yamaguchi, Yasuhiro, Kakegawa-shi, Shizuoka (JP)
(74) Representative: Grünecker Patent- und Rechtsanwälte PartG mbB

(56) References cited:
- WO-A1-2014/024430
- WO-A1-2014/024448
- WO-A1-2020/183817
- JP-A- 2013 110 283
- JP-A- 2017 123 318
- US-A1- 2021 203 040

## Description

### TECHNICAL FIELD

The present invention relates to a bus bar.

### BACKGROUND

JP 2001-286028 A proposes a bus bar in which a wiring pathway is formed of a single member made from a conductive material. The single member is formed in a shape along the wiring pathway by performing press working on a single flat plate shaped base material. Alternatively, the single member is formed in a shape along the wiring pathway by performing a forming process on a single linear base material.

### SUMMARY

In a bus bar, plate processing is performed as surface treatment in order to improve the electrical connection reliability of connection portions for electrical input-output. However, in a case where a wiring pathway is formed of a single member like the bus bar described in JP 2001-286028 A, it is necessary to perform plate processing on the entirety of the bus bar, thereby increasing the used amount of a plating material and thus increasing the cost. Although plate processing may be performed in a state where the portion other than the connection portions of the bus bar is masked in order to decrease the used amount of a plating material, it is still necessary to perform masking work, thereby increasing the cost.
From document WO 2014/024430 A1 it is known a bus bar, which comprises a member made of a conductive material and another member consecutively arranged to form a plate shape defining a wiring pathway. The members are connected to each other. A plated layer is disposed on a portion of the surface of one member.
From document WO 2014/024448 A1 it is known a bus bar that is made of a metal material formed by joining a first metal plate formed an aluminum plate and a second metal plate formed from a different type of metal. Furthermore, this document describes a cladding boundary of the bus bar.
Document JP 2017 123318 A describes a conductive member which is a kind of bus bar and a laser welding is applied to connect a copper member with an aluminum member. During the laser welding, a laser beam is moved a plurality of times along the abutted portion to melt an end portion of the aluminum member so as to form a linear fused portion along the abutted portion.
Document JP 2013 110283 A discloses a bus bar which has a pair of holes for connecting electrodes of a battery. A coupling member/bus bar is welded to the columnar part of an intermediate member and coupled to an external terminal of an electronic component.
Document WO 2020/183817 A1 discloses a bus bar for connecting terminals and the bus bar has a copper portion connected to a first terminal of a battery and an aluminum portion connected to a second terminal of the battery. Furthermore, a bonding portion is provided that bonds the copper portion and the aluminum portion together.
In document US 2021/0203040 A1 it is described a bus bar, which comprises connection members made from a conductive material with a plate shape defining a wiring pathway.
An object of the present invention is to provide a lower cost bus bar.
This object is solved by the subject matter of claim 1.

According to the aforementioned configuration, it is possible to provide a lower cost bus bar.

### BRIEF DESCRIPTION OF THE DRAWINGS

Fig. 1 is a block diagram of a bus bar according to an embodiment applied between different battery stacks.
Fig. 2 is a plan view of an example of the bus bar according to the embodiment.
Fig. 3 is a perspective view of another example of the bus bar according to the embodiment.
Fig. 4 is a perspective view of yet another example of the bus bar according to the embodiment.
Fig. 5 is a perspective view of still yet another example of the bus bar according to the embodiment.
Fig. 6 is an enlarged perspective view of the main part of still yet another example of the bus bar according to the embodiment.

### DETAILED DESCRIPTION

Various embodiments will be described hereinafter with reference to the accompanying drawings.

A detailed description will be hereinbelow provided for a bus bar 1 according to an embodiment by referring to the drawings. Noted that the proportions of the dimensions of the drawings are exaggerated for illustration purposes and therefore the proportions may be different from actual ones.

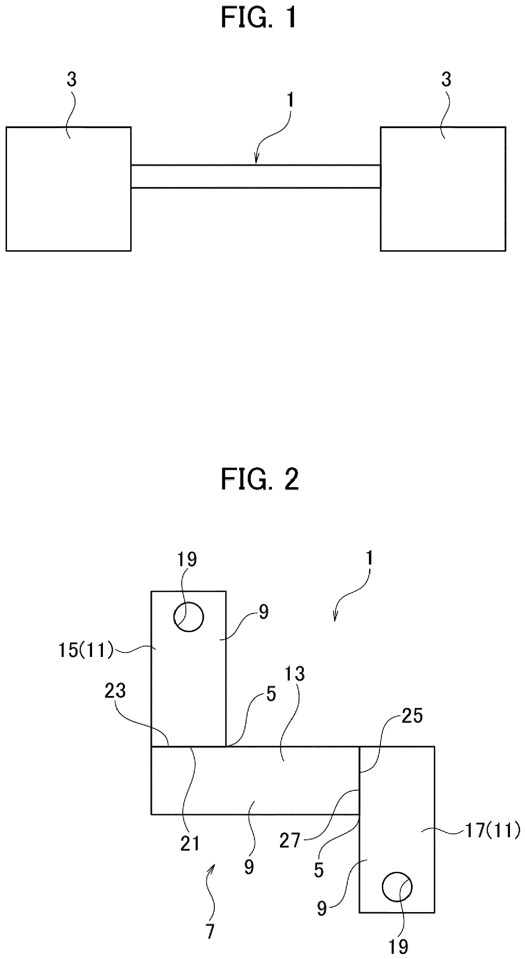

As illustrated in Figs. 1 and 2, the bus bar 1 according to the embodiment is made from a conductive material and electrically connects between different battery stacks 3 mounted on a vehicle, for example. The bus bar 1 includes a wiring pathway 7 having bent portions 5 to avoid interference with non-illustrated peripheral members arranged between the battery stacks 3. The wiring pathway 7 includes plate shaped members 9 consecutively arranged. The members 9 include connection members 11 and a conductive member 13.

The connection members 11 include a first connection member 15 and a second connection member 17 arranged at both ends of the wiring pathway 7. Connection portions 19 electrically connected to the battery stacks 3 are provided in the first connection member 15 and the second connection member 17, respectively. The connection portions 19 are fastening portions to which non-illustrated fastening members such as bolts are fastened, for example.

The first connection member 15 and the second connection member 17 are made from copper which has excellent electrical connection to the battery stacks 3 and is suitable for fastening of the fastening members, for example. The first connection member 15 and the second connection member 17 may be made from copper alloy composed mainly of copper. The first connection member 15 and the second connection member 17 may be made from 6000 series aluminum alloy composed mainly of aluminum which has excellent electrical connection to the battery stacks 3 and is suitable for fastening of the fastening members, for example. In this way, the material for the connection members 11 may be any materials as long as it has excellent conductivity and excellent stiffness.

The first connection member 15 and the second connection member 17 are respectively formed in a quadrangular plate shape by press working or a forming process. The first connection member 15 and the second connection member 17 are readily processable due to their simple quadrangular shape, thereby reducing the manufacturing cost. In the embodiment, the first connection member 15 and the second connection member 17 have the same plate thickness, the same plate width, and the same plate length. Thus, the first connection member 15 and the second connection member 17 can be formed by the same processing method, thereby reducing the manufacturing cost even more. The first connection member 15 and the second connection member 17 may be made from different materials and have different plate thicknesses, different plate widths, and different plate lengths. The conductive member 13 is arranged between the first connection member 15 and the second connection member 17.

The conductive member 13 is arranged between the first connection member 15 and the second connection member 17 in the wiring pathway 7. The conductive member 13 is made from copper as with the connection members 11. The conductive member 13 may be made from copper alloy composed mainly of copper. When the connection members 11 are made from aluminum alloy composed mainly of aluminum, for example, the conductive member 13 may be made from the same aluminum alloy.

The conductive member 13 is formed in a quadrangular plate shape by press working or a forming process. The conductive member 13 is readily processable due to its simple quadrangular shape, thereby reducing the manufacturing cost. In the embodiment, the conductive member 13 and the connection members 11 have the same plate thickness, the same plate width, and the same plate length. Thus, the conductive member 13 and the connection members 11 can be formed by the same processing method, thereby reducing the manufacturing cost even more. The conductive member 13 and the connection members 11 may have different plate thicknesses, different plate widths, and different plate lengths. For example, the plate width of the conductive member 13 may be larger than the plate width of the respective connection members 11 in order to improve heat dissipation of the conductive member 13 with the increased surface area.

The conductive member 13 may be formed to have the bent portions 5 in the wiring pathway 7. When the conductive member 13 is provided with the bent portions 5, the conductive member 13 may be made from 1000 series aluminum alloy composed mainly of aluminum which is softer than and superior in formability to the connection members 11, for example. The plate thickness of the conductive member 13 may be less than the plate thickness of the connection members 11 in order to reduce the stiffness of the conductive member 13 with increased formability. In this way, the increased formability of the conductive member 13 allows processing for forming the bent portions 5 in the conductive member 13 to be easily carried out, thereby reducing the manufacturing cost.

The members 9 including the conductive member 13 and the connection members 11 described above are arranged along the wiring pathway 7 and the portions in contact with each other are connected to each other by laser joining. An example of the connection of the members 9 in the bus bar 1 is described below. First, a connection surface 23 which is one end surface of the conductive member 13 in the width direction thereof is arranged to be in contact with a connection surface 21 which is one end surface of the first connection member 15 in the length direction thereof. Next, the portions where the connection surface 21 of the first connection member 15 and the connection surface 23 of the conductive member 13 are in contact with each other are connected to each other by laser joining. The connection of the first connection member 15 and the conductive member 13 forms a bent portion 5 in the wiring pathway 7.

Next, a connection surface 27 which is one end surface of the second connection member 17 in the width direction thereof is arranged to be in contact with a connection surface 25 which is one end surface of the conductive member 13 in the length direction thereof. Then, the portions where the connection surface 25 of the conductive member 13 and the connection surface 27 of the second connection member 17 are in contact with each other are connected to each other by laser joining. The connection of the conductive member 13 and the second connection member 17 forms a bent portion 5 in the wiring pathway 7.

In this way, the wiring pathway 7 having the bent portions 5 can be formed by consecutively connecting the members 9 to each other by laser joining. Thus, there is no need to form a single member in a shape along the wiring pathway 7 by press working or a forming process and it is possible to easily correspond with wiring pathways 7 having various shapes. When the connection members 11 and the conductive member 13 are made from different types of metal such as copper and aluminum, an intermetallic compound may be generated at the connection portions thereof, causing the joint strength to decrease. Thus, when the connection members 11 and the conductive member 13 are made from different types of metal, a clad member including the same types of metal as the connection members 11 and the conductive member 13 may be interposed between the connection members 11 and the conductive member 13.

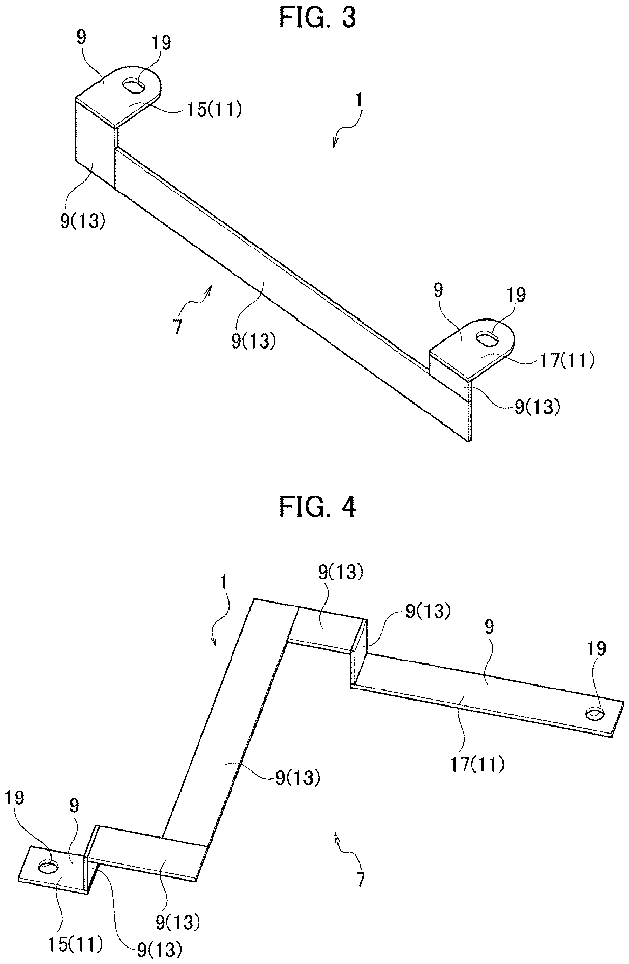

In the bus bar 1 described above, the members 9 are arranged in the same plane. However, the present invention is not limited to this. For example, as illustrated in Figs. 3 to 5, the members 9 may be arranged three-dimensionally and consecutively connected to each other by laser joining in order to correspond with the three-dimensional wiring pathway 7. The bend angles at the bent portions 5 are not limited to 90 degrees. The bend angles at the bent portions 5 may be less than 90 degrees or more than 90 degrees in accordance with the bend shape of the wiring pathway 7.

Since the bus bar 1 is a member which electrically connects between the battery stacks 3, it is preferable to perform plate processing as surface treatment in order to improve the electrical connection reliability between the bus bar 1 and the battery stacks 3. However, in a case where the bus bar 1 is formed of a single member, it is necessary to perform plate processing on the entirety of the bus bar 1, thereby increasing the used amount of a plating material and thus increasing the cost. Although plate processing may be performed in a state where the portion other than the connection portions 19 of the bus bar 1 is masked in order to decrease the used amount of a plating material, it is still necessary to perform masking work, thereby increasing the cost. Thus, only the connection members 11 are plated in the bus bar 1 according to the embodiment.

In the bus bar 1, plate processing as surface treatment is performed on the first connection member 15 and the second connection member 17 after the first connection member 15 and the second connection member 17 are formed by press working or a forming process, for example. In contrast, plate processing as surface treatment is not performed on the conductive member 13 after the conductive member 13 is formed by press working or a forming process, for example. Thus, in a state where the first connection member 15, the conductive member 13, and the second connection member 17 are connected to each other, plate processing as surface treatment has been performed on only the first connection member 15 and the second connection member 17. Accordingly, it is possible to achieve a state where plate processing has been performed on the first connection member 15 and the second connection member 17 including the connection portions 19 without requiring masking work, thereby decreasing the cost of the bus bar 1. Additionally, it is possible to decrease the used amount of a plating material and thus decrease the cost.

In this way, the electrical connection reliability between the connection members 11 and the battery stacks 3 can be improved by performing plate processing on the connection members 11. Performing plate processing on the connection members 11 can be also applied to a case such as the bus bar 1 illustrated in Figs. 3 to 5 where the members 9 are arranged three-dimensionally. When the connection members 11 which have been plated and the conductive member 13 which has not been plated are connected to each other in the three-dimensional bus bar 1, the connection surfaces arranged in the same plane may be brought into contact with each other and then connected to each other by laser joining.

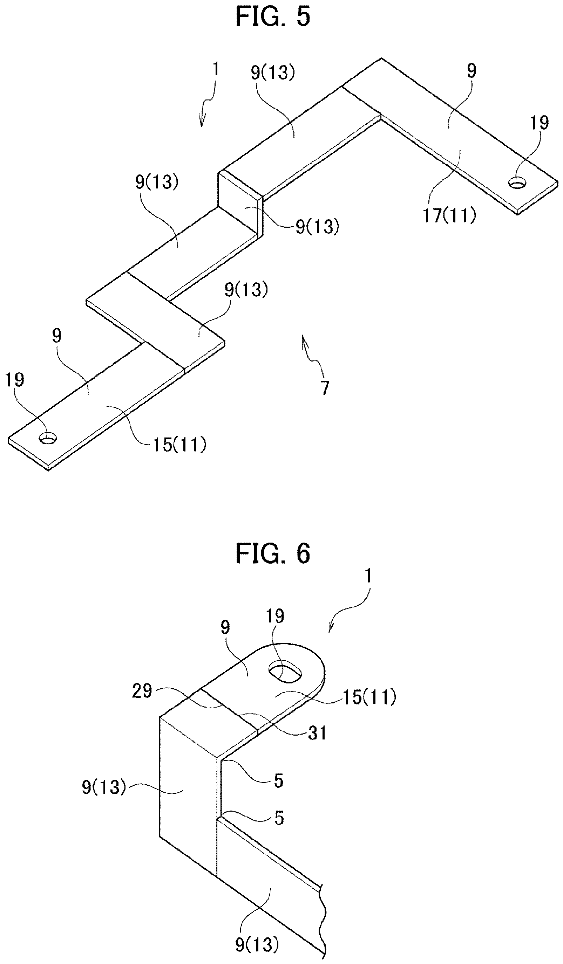

For example, in the bus bar 1 illustrated in Fig. 3, the conductive member 13 is bent at the connection portions between the first connection member 15 and the conductive member 13 such that a part of the conductive member 13 is located in the same plane as the first connection member 15 as illustrated in Fig. 6. Then, a connection surface 29 which is an end surface of the first connection member 15 and a connection surface 31 which is an end surface of the conductive member 13 located in the same plane are brought into contact with each other, and the portions at which the connection surfaces 29, 31 are in contact with each other are connected to each other by laser joining.

In the bus bar 1 illustrated in Fig. 3, when a connection surface of the first connection member 15 and a connection surface of the conductive member 13 are connected to each other, the position of the conductive member 13 is hard to see and the position for the laser irradiation is hard to identify if a laser is irradiated from the first connection member 15 side. When the connection surfaces of the first connection member 15 and the conductive member 13 are connected to each other as illustrated in Fig. 3, the welding quality may be degraded if a laser is irradiated from the first connection member 15 side since the conductive member 13 side is also melted by the welding. In contrast, when the connection surfaces 29, 31 located in the same plane are connected to each other as illustrated in Fig. 6, the connection portions are easy to see, improving workability. Additionally, since direct welding can be performed along the connection border of the connection surfaces 29, 31 without melting the opposite surface, the welding quality can be improved.

The bus bar 1 described above includes the members 9 which are made from a conductive material and consecutively arranged to form a plate shape defining the wiring pathway 7. The members 9 adjacent to each other are connected to each other by laser joining. The members 9 include the connection members 11 located at both ends of the wiring pathway 7 and having the connection portions 19 for electrical input-output, and the conductive member 13 arranged between the connection members 11. In the members 9, only the connection members 11 are plated.

Thus, unlike a case where the wiring pathway 7 is formed of a single member, it is possible to achieve a state where plate processing has been performed on the connection members 11 including the connection portions 19 without requiring masking work, thereby decreasing the cost. Additionally, it is possible to decrease the used amount of a plating material and thus decrease the cost. Accordingly, it is possible to provide the bus bar 1, with which cost is reduced.

The connection members 11 and the conductive member 13 are connected to each other in a state where the connection surfaces 29, 31 located in the same plane are in contact with each other. Thus, the connection portions are easy to see, improving workability. Additionally, since direct welding can be performed along the connection border of the connection surfaces 29, 31, the welding quality can be improved.

The wiring pathway 7 electrically connects between the different battery stacks 3. Thus, the bus bar 1 plated at low cost can be applied to wiring pathways 7 having various shapes designed to be arranged between the different battery stacks 3.

The bus bar 1 according to the embodiment electrically connects the different battery stacks 3 to each other. However, the present invention is not limited to this. For example, the bus bar 1 may be arranged between any electric components, for example, between a power source and a device and between a device and a device.

In the bus bar 1 according to the embodiment, the wiring pathway 7 includes the bent portions 5. However, the present invention is not limited to this. The wiring pathway 7 may be linear as long as only the connection members 11 in the members 9 are plated.

In the bus bar 1 according to the embodiment, one conductive member 13 is arranged between the first connection member 15 and the second connection member 17. However, the present invention is not limited to this. Two or more conductive members 13 may be arranged between the first connection member 15 and the second connection member 17.

## Claims

1. A bus bar (1) comprising:
members (9) made from a conductive material and consecutively arranged to form a plate shape defining a wiring pathway (7), wherein
the members (9) adjacent to each other are laser joined members,
the members (9) include:
connection members (11) arranged at both ends of the wiring pathway (7) and having connection portions (19) for electrical input-output; and
a conductive member (13) arranged between the connection members (11), and
in the members (9), only the connection members (11) are plated.

2. The bus bar (1) according to claim 1, wherein the conductive member (13) and at least one of the connection members (11) are connected to each other in a state where connection surfaces (29, 31) of the at least one of the connection members (11) and the conductive member (13) located in a same plane are in contact with each other.

3. The bus bar (1) according to claim 1 or 2, wherein the wiring pathway (7) electrically connects between different battery stacks (3).

## Patentansprüche

1. Sammelschiene (1), die umfasst:
Elemente (9), die aus einem leitenden Material bestehen und aufeinanderfolgend so angeordnet sind, dass sie eine Plattenform bilden, die einen Verdrahtungsweg (7) bestimmt, wobei
die aneinandergrenzenden Elemente (9) laserverschweißte Elemente sind,
und die Elemente (9) einschließen:
Verbindungselemente (11), die an beiden Enden des Verdrahtungsweges (7) angeordnet sind,
und Verbindungsabschnitte (19) für elektrischen Eingang/Ausgang aufweisen; sowie
ein leitendes Element (13), das zwischen den Verbindungselementen (11) angeordnet ist, und von den Elementen (9) nur die Verbindungselemente (11) plattiert sind.

2. Sammelschiene (1) nach Anspruch 1, wobei das leitende Element (13) und wenigstens eines der Verbindungselemente (11) in einem Zustand miteinander verbunden sind, in dem Verbindungsflächen (29, 31) der Verbindungselemente (11) oder/und des leitenden Elementes (13), die sich in ein und derselben Ebene befinden, miteinander in Kontakt sind.

3. Sammelschiene (1) nach Anspruch 1 oder 2, wobei der Verdrahtungsweg (7) elektrische Verbindung zwischen verschiedenen Batteriestapeln (3) herstellt.

## Revendications

1. Barre omnibus (1) comprenant :
des éléments (9) constitués d'un matériau conducteur et disposés de manière successive pour former une forme de plaque définissant un trajet de câblage (7),
les éléments (9) adjacents l'un à l'autre étant des éléments joints par laser,
les éléments (9) incluant :
des éléments de raccordement (11) disposés aux deux extrémités du trajet de câblage (7) et ayant des portions de raccordement (19) pour l'entrée-la sortie électrique ; et
un élément conducteur (13) disposé entre les éléments de raccordement (11), et
dans les éléments (9), uniquement les éléments de raccordement (11) étant plaqués.

2. Barre omnibus (1) selon la revendication 1, l'élément conducteur (13) et au moins l'un des éléments de raccordement (11) étant raccordés l'un à l'autre dans un état où des surfaces de raccordement (29, 31) du au moins un des éléments de raccordement (11) et de l'élément conducteur (13) localisés dans un même plan se trouvent en contact l'un avec l'autre.

3. Barre omnibus (1) selon la revendication 1 ou 2, le trajet de câblage (7) effectuant électriquement un raccordement entre différents empilements de batteries (3).
